## Europäisches Patentamt

## European Patent Office

## Office européen des brevets

(19)

(11) Numéro de publication: **0 192 539**
**B1**

(12) # FASCICULE DE BREVET EUROPÉEN

(45) Date de publication du fascicule du brevet:
**02.11.88**

(51) Int. Cl.⁴: **B 01 D 3/22**

(21) Numéro de dépôt: **86400234.0**

(22) Date de dépôt: **04.02.86**

(54) Colonne de distillation à circulation hélicoidale de liquide.

(30) Priorité: **11.02.85 FR 8501874**

(43) Date de publication de la demande:
**27.08.86 Bulletin 86/35**

(45) Mention de la délivrance du brevet:
**02.11.88 Bulletin 88/44**

(84) Etats contractants désignés:
**DE GB NL**

(56) Documents cité:
**FR-A-2 190 510**
**GB-A-141 374**
**GB-A-1 506 393**
**GB-A-2 093 712**

(73) Titulaire: **SOCIETE NATIONALE ELF AQUITAINE Société anonyme dite, Tour Elf 2, Place de la Coupole La Défense 6, F-92400 Courbevoie (FR)**

(72) Inventeur: **Gourlia, Jean Paul, 11 rue Duguesclin, F-69006 Lyon (FR)**
Inventeur: **Neel, Laurent, 118 avenue Jean Jaurès, F-92120 Montrouge (FR)**
Inventeur: **Ptak, Christian, 18 rue Rubens, F-75013 Paris (FR)**
Inventeur: **Tondeur, Daniel, 259 rue Salvador Allende, F-54230 Neuves Maisons (FR)**

(74) Mandataire: **Epstein, Henri, 18 Résidence La Gaillarderie, F-78590 Noisy- le- Roi (FR)**

LIBER, STOCKHOLM 1988

EP 0 192 539 B1

## Description

La présente invention se rapporte aux colonnes de distillation à plateaux dans lesquelles des gaz et des vapeurs subdivisés en courants séparés ne se mélangeant pas rencontrent à contre-courant une phase liquide cheminant en sens hélicoidal d'un plateau à l'autre.

Elle concerne plus particulièrement une colonne de distillation dans laquelle les plateaux en forme de demi-cercle sont disposés alternativement de part et d'autre d'une paroi verticale continue divisant la colonne en deux secteurs étanches au passage des gaz et des vapeurs et décalés axialement, chaque plateau comportant à l'un de ses bords une aire de réception de liquide et à l'autre un pan coupé formant un déversoir, lesdites aires de réception et lesdits déversoirs étant situés alternativement dans la succession de plateaux superposés des deux côtés du plateau.

Dans une colonne classique réalisant un courant croisé du liquide par rapport au gaz, le liquide traverse les plateaux alternativement de gauche à droite et de droite à gauche ou vice-versa. Lors de la traversée du plateau, le liquide s'appauvrit en composé le plus volatil. Dans la mesure où le débit vapeur est uniformément réparti, ainsi que le débit du liquide, le coefficient de transfert sera constant sur toute la surface. De ce fait, la concentration du composé volatil dans le gaz s'accroit entre deux plateaux superposés dans le sens opposé au sens d'écoulement du liquide sur le plateau. Les gradients de concentration des deux phases présentent des pentes inverses et à l'endroit de rapprochement des courbes la différence de concentration est faible. Ainsi, l'entrée du liquide sur le plateau supérieur se trouvant du côté opposé à l'entrée du liquide du plateau précédant, la fraction du gaz traversant le deuxième plateau superposé riche en composé volatil rencontre le liquide appauvri en ce composé, tandis que la fraction pauvre en composé volatil rencontre le liquide riche en ce composé.

La différence de concentrations entre les deux phases diminuant, le transfert de matière sera plus faible et l'efficacité global du plateau décroit. Par ailleurs, le remélange de gaz entre deux plateaux contribue également, même lorsque les gaz rencontrent sur chaque plateau un liquide circulant dans un même sens, à la diminution de la différence de la concentration entre les deux phases, car un mélange homogène implique une composition de gaz moyenne présentant une différence de concentration avec la phase liquide faible.

En tenant compte de réalités exposées ci-dessus, on s'est efforcé d'améliorer l'efficacité des plateaux de la colonne en subdivisant le courant gazeux et en faisant circuler le liquide en sens hélicoidal d'un plateau à l'autre, de façon à conserver le même sens de parcours du liquide sur chaque plateau.

La subdivision en deux secteurs est réalisée au moyen d'une paroi verticale, de part et d'autre de laquelle sont placés des plateaux en demi-cercle décalés axialement.

La présente invention a pour objet d'accroitre encore davantage l'efficacité de plateau et elle est caractérisée en ce que chaque secteur de la colonne est subdivisé par au moins une paroi verticale en ou moins deux sous-secteurs de superficie sensiblement égale, laquelle paroi comporte au dessus de chaque plateau une découpe laissant entre le bord de la découpe et le plateau un passage pour le liquide traversant le plateau d'un sous- secteur à l'autre, de sorte que chaque sous-secteur soit parcouru par un courant gazeux ne se mélangeant pas aux autres courants gazeux, tandis que les courants gazeux circulant chacun le long d'un seul sous-secteur rencontrent à contre-courant le même courant de liquide total cheminant en sens hélicoidal d'un plateau à l'autre.

En effet, l'efficacité de plateau peut être augmentée avec l'accroissement du nombre de secteurs parcourus par des courants de gaz et de vapeurs séparés. Cet accroissement d'efficacité $\delta$ est donné par l'équation:

$$\delta = E \frac{p-1}{p+1},$$

où E est l'efficacité des plateaux classiques et p le nombre de secteurs. Ainsi, si l'accroissement d'efficacité en utilisant deux secteurs n'est que de 0,33, celui résultant de l'utilisation des quatre secteurs est de 0,60, celui de huit secteurs de 0,75.

La colonne de quatre secteurs de superficie sensiblement égale selon l'invention peut être obtenue en subdivisant les secteurs en sous-secteurs au moyen d'une paroi verticale perpendiculaire à la paroi verticale continue divisant la colonne en deux secteurs.

Pour construire une colonne de six sous-secteurs, on place deux parois verticales parallèles à angle droit par rapport à la paroi verticale continue.

Chaque sous-secteur ainsi obtenu peut être divisé en deux parties de superficie sensiblement égale en plaçant une paroi supplémentaire assurant la séparation étanche des courants gazeux, pour une colonne à huit ou douze plateaux En ce qui concerne la hauteur de la découpe pratiquée dans les parois créant des sous-secteurs, celle-ci peut être au plus égale à la hauteur du barrage de déversoir. Toutefois, on donnera à ces découpes une dimension compatible avec les conditions souhaitées de fonctionnement de la colonne, en conservant la plus grande flexibilité de marche.

En ce qui concerne le passage du liquide d'un plateau à l'autre, chaque plateau peut présenter à l'un de ses bords un segment de cercle s'étendant jusqu'à l'enveloppe de la colonne et se prolongeant vers le secteur opposé à celui occupé par le plateau, lesdits segments constituant l'aire d'entrée du liquide provenant du plateau supérieur vers le plateau inférieur, et à l'autre bord un pan coupé formant déversoir.

Des cloisons verticales placées orthogonalement par rapport à la paroi verticales continue délimitent avec la paroi de l'enveloppe des cheminées de section droite en segment de cercle, lesdites cloisons présentant sur une moitié de leur section horizontale une face continue joignant les aires de réception de liquide des plateaux occupant le même secteur de colonne et munies de découpes à cet endroit et présentant sur l'autre moitié de leur section horizontale une succession des faces de longueur moindre joignant par leur bord inférieur le segment du bord du plateau immédiatement supérieur formant avec ledit pan un barrage de déversoir. De préférence, au moins une face continue de cloison verticale est formée par le pliage à angle droit de la paroi verticale continue.

D'autres particularités de l'invention apparaitront à la lumière de la description des modes de réalisation présentés à titre d'exemple et illustrés à l'aide de dessins, dont

la figure 1 représente une vue en perpective de l'intérieur d'une colonne à quatre sous-secteurs,

la figure 2 une vue en perpective de l'intérieur d'une colonne à six sous-secteurs, et

la figure 3 un diagramme montrant l'accroissement de l'efficacité des plateaux en fonction de l'efficacité de plateaux classiques.

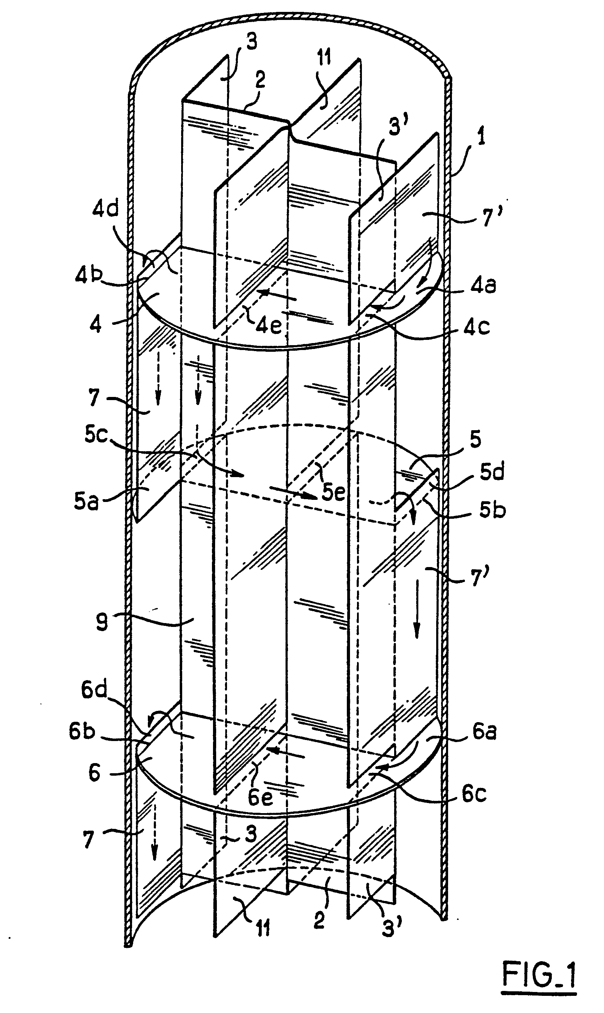

Selon le mode de réalisation représenté à la figure 1, la colonne d'enveloppe extérieure 1 est équipée de plateaux semi-circulaires 4, 5 et 6 décalés axialement et situés alternativement de part et d'autre d'une paroi verticale continue divisant diamétralement la colonne en deux secteurs verticaux.

L'un des bords des plateaux 4, 5 et 6 se termine par un segment de cercle 4a, 5a et 6a touchant la paroi de l'enveloppe 1 et se prolongeant vers le secteur opposé à celui occupé par le plateau. Ce segment constitue l'aire d'entrée du liquide provenant du plateau supérieur vers le plateau inférieur. Lesdits segments 4a, 5a et 6a sont situés alternativement dans la succession des plateaux superposés, tantôt d'un côté du plateau, tantôt de l'autre côté.

Les bords opposés 4b, 5b et 6b de plateaux sont découpés selon une sécante, laissant entre eux et l'enveloppe 1 un passage pour le déversement du liquide. Ces bords 4b, 5b et 6b sont munis de barrages de déversoir 4d, 5d et 6d pour le réglage du niveau de remplissage de chaque plateau. Orthogonalement par rapport à la paroi verticale 2 sont placées des cloisons verticales 3, 7, 3' et 7' délimitant avec la paroi de l'enveloppe 1 des cheminées verticales de section droite en segment de cercle pour la descente du liquide.

Les cloisons verticales présentent sur une moitié de leur section horizontale une face continue 3, 3' joignant les aires de réception de liquide des plateaux 4, 6 occupant le même secteur de colonne et munie de découpes 4c, 5c et 6c à cet endroit.

Sur l'autre moitié de leur section horizontale, les cloisons présentent une succession des faces 7, 7' de longueur moindre joignant par leur bord inférieur le segment du bord du plateau 4a, 5a et 6a formant l'aire d'entrée de liquide et par leur bord supérieur joignant le pan coupé du plateau immédiatement supérieur formant avec ledit pan un barrage de déversoir. La face continue 3 de la cloison verticale du côté gauche sur la figure 1, est formée par le pliage à angle droit de la paroi verticale 2.

A la paroi verticale 2 qui divise le volume de la colonne en deux secteurs est fixée en son milieu à angle droit une autre plaque verticale 11 formant avec la première une construction en croix et qui subdivise chaque secteur en deux sous-secteurs étanches au passage des gaz et des vapeurs entre eux.

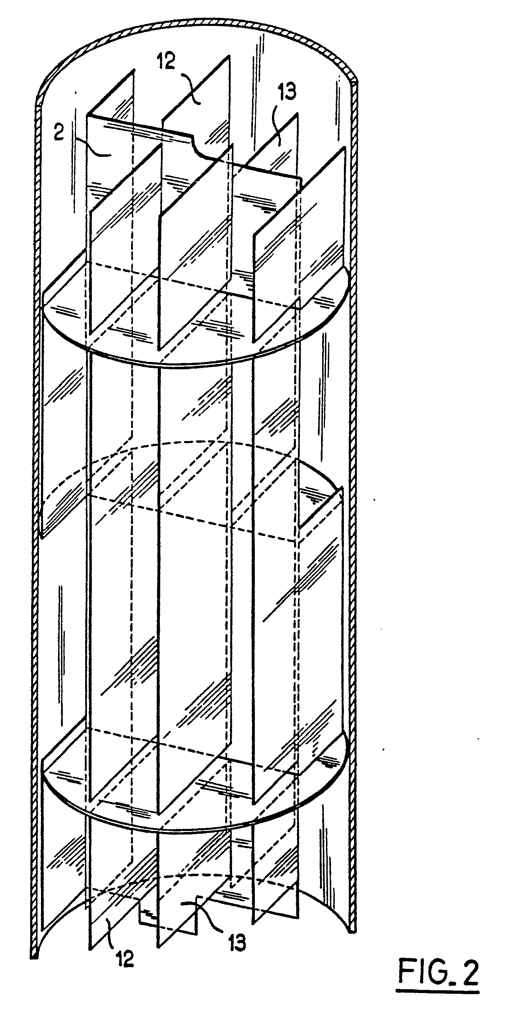

A la hauteur de chaque plateau 4, 5 et 6, la paroi 11 présente, alternativement d'un côté ou de l'autre côté de la paroi 2, des découpes 4e, 5e et 6e de hauteur au moins égale à la hauteur du liquide remplissant le plateau, formant ainsi un joint hydraulique étanche aux gaz et aux vapeurs. Selon le mode de réalisation de la figure 2, à la paroi verticale 2 sont fixées avec espacement deux parois verticales 12 et 13 parallèles, chacune subdivisant les secteurs en trois sous-secteurs étanches entre eux au passage des gaz et de vapeurs. Lesdites parois 12 et 13 présentent à la hauteur de chaque plateau, alternativement d'un côté et de l'autre de la paroi 2, des découpes similaires aux découpes 4e, 5e et 6e de la figure 1.

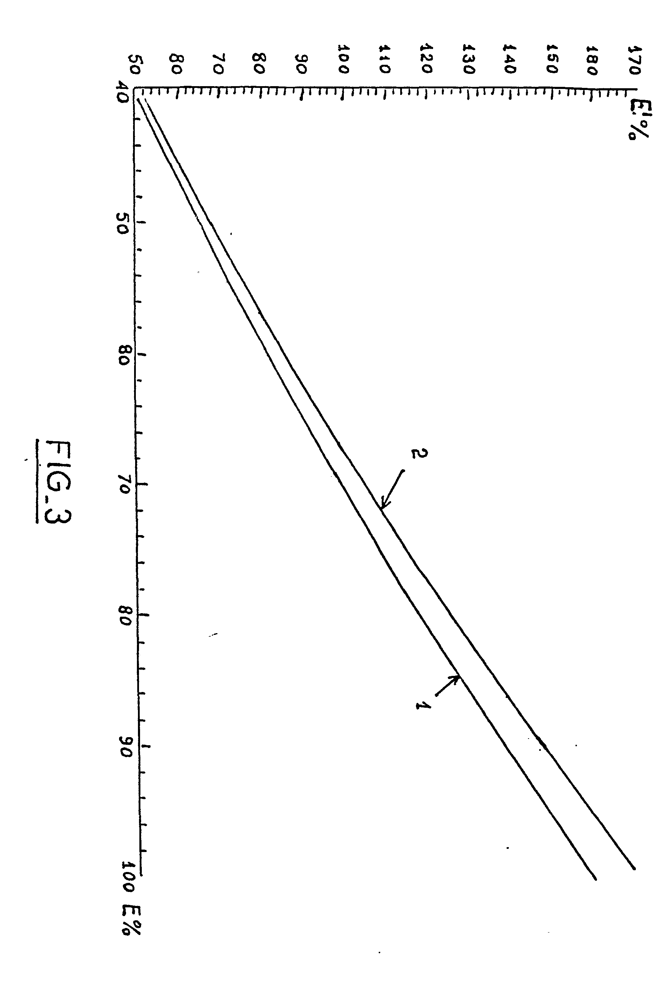

Le diagramme représenté à la figure 3 montre l'accroissement d'efficacité avec l'augmentation du nombre de sous-secteurs, en faisant figurer les valeurs de l'efficacité de plateaux hélicoidaux E' en % en fonction de l'efficacité de plateaux classiques E en %. Les valeurs correspondant à une colonne à quatre sous-secteurs sont représentées par la courbe 1 et celles correspondant à une colonne à six sous-secteurs par la courbe 2. On voit, que si l'efficacité initiale est de 80 %, la mise en place des quatre sous-secteurs permet d'atteindre une efficacité de

$$0,8 \times (1 + 0,48) = 118\,\%.$$

Ce gain peut se traduire de deux manières. Pour une colonne existante, la mise en place de ces plateaux entraine une économie d'énergie faible pour les séparations faciles, forte pour les séparations difficiles. Pour une colonne nouvelle, les règles de dimensionnement sont changées. Par exemple, si 30 plateaux sont nécessaires pour une séparation donnée, l'utilisation de plateaux à deux secteurs permet de diminuer la hauteur de la colonne de 25 % et de 32 % pour une colonne à quatre secteurs.

## Revendications

1. Colonne de distillation à plateaux dans laquelle des plateaux (4, 5, 6) en forme de demi-cercles sont disposés alternativement de part et d'autre d'une paroi verticale (2) continue divisant la colonne en deux secteurs étanches au passage des gaz et des vapeurs et décalés axialement, chaque plateau comportant à l'un de ses bords une aire de réception de liquide (4a, 5a, 6a) et à l'autre un pan coupé formant un déversoir (4d, 5d, 6d), lesdites aires de réception et lesdits déversoirs étant situés alternativement dans la succession de plateaux superposés tantôt d'un, tantôt de l'autre côté du plateau, caractérisée en ce que chaque secteur de la colonne est subdivisé par au moins une paroi verticale (11) en au moins deux sous-secteurs de superficie sensiblement égale, laquelle paroi comporte au dessus de chaque plateau une découpe (4e, 5e, 6e) laissant entre le bord de la découpe et le plateau un passage pour le liquide traversant le plateau d'un sous-secteur à l'autre, de sorte que chaque sous-secteur soit parcouru par un courant gazeux ne se mélangeant pas aux autres courants gazeux, tandis que les courants gazeux circulant chacun le long d'un seul sous-secteur rencontrent à contre-courant le même courant de liquide total cheminant en mouvement hélicoïdal d'un plateau à l'autre.

2. Colonne présentant au moins quatre sous-secteurs selon la revendication 1, caractérisée en ce que la paroi verticale (11) subdivisant les secteurs en sous-secteurs est perpendiculaire à la paroi verticale continue (2) divisant la colonne en deux secteurs.

3. Colonne présentant six sous-secteurs selon la revendication 1, caractérisée par deux parois verticales parallèles (12, 13) placées à angle droit par rapport à la paroi verticale continue (2), divisant la colonne en six sous-secteurs étanches au passage de gaz et de vapeurs et munies de découpes au dessus de chaque plateau.

4. Colonne présentant au moins huit sous-secteurs selon la revendication 2, caractérisée en ce que chaque sous-secteur réalisé par la subdivision par la paroi verticale continue (2) et par la paroi verticale (11) munie de découpe est subdivisé en deux secteurs de superficie sensiblement égale par une paroi verticale supplémentaire.

5. Colonne selon l'une des revendications 1 à 4, caractérisée en ce que la découpe (4e, 5e, 6e) que présente chaque paroi verticale (11) subdivisant chaque secteur en sous-secteurs présente une hauteur au plus égale à la hauteur du barrage de déversoir (4d, 5d, 6d) pour assurer l'effet de joint hydraulique à l'endroit de séparation de secteurs de la colonne.

6. Colonne selon l'une des revendications 1 à 5, caractérisée en ce que chaque plateau en demi-cercle présente à l'un de ses bords un segment de cercle (4a, 5a, 6a) s'étendant jusqu'à l'enveloppe (1) de la colonne et se prolongeant vers le secteur opposé à celui occupé par le plateau, lesdits segments (4a, 5a, 6a) constituant l'aire d'entrée du liquide provenant du plateau supérieur vers le plateau inférieur, et à l'autre bord un pan coupé formant déversoir (4d, 5d, 6d).

7. Colonne selon l'une des revendications 1 à 6, caractérisée en ce que des cloisons (3, 7 et 3', 7') verticales placées orthogonalement par rapport à la paroi verticale continue (2) délimitent avec la paroi (1) de l'enveloppe des cheminées verticales de section droite en segment de cercle, lesdites cloisons verticales présentant sur une moitié de leur section horizontale une face continue (3, 3') joignant les aires de réception de liquide des plateaux (4, 6) occupant le même secteur de colonne et munie de découpes (4c, 5c, 6c) à cet endroit, et présentant sur l'autre moitié de leur section horizontale une succession des faces (7, 7') de longueur moindre joignant par leur bord inférieur le segment du bord du plateau (4a, 5a, 6a) formant l'aire d'entrée de liquide et par leur bord supérieur joignant le pan coupé du plateau immédiatement supérieur formant avec ledit pan un barrage de déversoir (4d, 5d, 6d).

8. Colonne selon la revendication 7, caractérisée en ce qu'au moins une des faces continues (3, 3') de cloisons verticales est formée par le pliage à angle droit de la paroi verticale continue (2).

## Patentansprüche

1. Destillationskolonne mit Platten, in der die halbkreisförmig ausgebildeten Platten (4, 5, 6) in Form von Halbkreisen auf beiden Seiten einer durchgehenden vertikalen Zwischenwand (2), welche die Kolonne in zwei für den Durchgang der Gase und der Dämpfe hermetisch voneinander abgeschlossene Bereiche trennt, angeordnet und axial gegeneinander verschoben sind, wobei jede Platte an einer Kante eine Aufnahmefläche (4a, 5a, 6a) für Flüssigkeit und an der anderen eine ein Sammelbecken bildende hochstehende Kante (4d, 5d, 6d) aufweist, wobei die Aufnahmeflächen und die Sammelbecken in der Aufeinanderfolge der übereinander angeordneten Platten abwechselnd an der einen und an der anderen Seite der Platte angeordnet sind,
dadurch gekennzeichnet,
daß jeder Bereich der Kolonne durch wenigstens eine vertikale Zwischenwand (11) in wenigstens zwei Unterbereiche gleicher Oberfläche unterteilt ist, wobei jede Zwischenwand über jeder Platte einen Ausschnitt (4e, 5e, 6e) aufweist, der zwischen der Kante des Ausschnittes und der Platte einen Durchgang für die die Platte von einem Unterbereich zum anderen überquerende Flüssigkeit läßt, so daß jeder Unterbereich von einem Gasstrom durchströmt wird, der sich nicht mit anderen durchströmenden Gasströmen mischt, während diejenigen Gasströme, die entlang eines einzigen Unterbereichs zirkulieren, auf den gleichartigen Gesamtflüssigkeitsstrom treffen, der in schraubenlinienförmiger Bewegung von einer Platte zur anderen umläuft.

2. Kolonne mit wenigstens vier Unterbereichen nach Anspruch 1, dadurch gekennzeichnet, daß die die Bereiche in Unterbereiche unterteilende senkrechte Zwischenwand (11) lotrecht zur durchgehenden vertikalen Zwischenwand (2), die die Kolonne in zwei Bereiche teilt, angeordnet ist.

3. Kolonne mit sechs Unterbereichen nach Anspruch 1, gekennzeichnet durch zwei, in bezug auf die durchgehende vertikale Zwischenwand (2) im rechten Winkel angeordnete, parallele, vertikale Zwischenwände (12, 13), die die Kolonne in sechs für den Durchgang der Gase und der Dämpfe hermetisch voneinander getrennte Unterbereiche unterteilt und mit Ausschnitten über jeder Platte versehen sind.

4. Kolonne mit wenigstens acht Unterbereichen nach Anspruch 2, dadurch gekennzeichnet, daß jeder durch die Unterteilung durch die durchgehende vertikale Zwischenwand (2) und die mit einem Ausschnitt versehene vertikale Zwischenwand (11) gebildete Unterbereich durch eine zusätzliche vertikale Zwischenwand in zwei Bereiche mit gleicher Oberfläche unterteilt ist.

5. Kolonne nach einem der Ansprüche 1 bis 4, dadurch gekennzeichnet, daß der Ausschnitt (4e, 5e, 6e), den jede jeden Bereich in Unterbereiche aufteilende vertikale Zwischenwand (11) aufweist, höchstens so hoch ist wie die Absperrwand (4d, 5d, 6d) des Sammelbeckens, um die Wirkung der hydraulischen Dichtung in bezug auf die Trennung der Bereiche der Kolonne zu gewährleisten.

6. Kolonne nach einem der Ansprüche 1 bis 5, dadurch gekennzeichnet, daß jede halbkreisförmige Platte an einer ihrer Kanten ein sich bis zum Gehäuse (1) der Kolonne erstreckendes und in Richtung des gegenüberliegenden, durch die Platte abgeschnittenen Bereiches ausgedehntes Kreissegment (4a, 5a, 6a) aufweist, wobei die Segmente (4a, 5a, 6a) die Eintrittsfläche für die von der darüberliegenden Platte zur darunterliegenden Platte strömende Flüssigkeit bilden, und an der anderen Kante eine ein Sammelbecken (4d, 5d, 6d) bildende hochstehende Rand aufweist.

7. Kolonne nach einem der Ansprüche 1 bis 6, dadurch gekennzeichnet, daß rechtwinklig zur vertikalen Zwischenwand (2) angeordnete vertikale Trennwände (3, 7 und 3', 7') mit der Gehäusewand (1) senkrechte Schächte mit kreissegmentförmigem Grundriß begrenzen, wobei die vertikalen Trennwände mit einer Hälfte ihres horizontalen Querschnittes eine durchgehende Fläche (3, 3'), welche die Flüssigkeitsaufnahmeflächen der Platten (4, 6) in demselben Abschnitt der Kolonne verbindet und an diesen Stellen mit Ausschnitten (4c, 5c, 6c) versehen ist, und mit der anderen Hälfte ihres horizontalen Querschnitts eine Folge von Flächen (7, 7') geringerer Länge bilden, deren Unterkante an das die Flüssigkeits-Eintrittsfläche bildende Plattensegment (4a, 5a, 6a) anliegt und deren Oberkante unmittelbar an den abgeschnittenen Rand der darüber angeordneten Platte anliegt, welche mit diesem Rand eine Absperrwand des Sammelbeckens (4d, 5d, 6d) bildet.

8. Kolonne nach Anspruch 7, dadurch gekennzeichnet, daß wenigstens eine der durchgehenden Flächen (3, 3') der vertikalen Trennwände durch rechtwinkliges Falzen der durchgehenden vertikalen Zwischenwand (2) gebildet ist.

## Claims

1. Distillation column with plates in which plates (4, 5, 6) in the form of semicircles are disposed alternately on both sides of a continuous vertical wall (2) dividing the column into two sectors which are leaktight to the passage of gases and vapours and staggered axially, each plate having at one of its edges a liquid reception area (4a, 5a, 6a) and at the other end a sectional pane forming an outlet (4d, 5d, 6d), the said reception areas and the said outlets being situated alternately in the sequence of superimposed plates sometimes on one and sometimes on the other side of the plate, characterised in that each sector of the column is subdivided by at least one wall (11) into at least two sub-sectors of substantially equal surface, the said wall having above each plate a cut-out section (4e, 5e, 6e) leaving between the edge of the cut-out section and the plate a passage for the liquid crossing the plate from one sub-sector to another, so that each sub-sector is traversed by a gaseous current which does not mix with other gaseous currents, whilst the gaseous currents each one of which circulates along a single sub-sector encounter flowing in the opposite direction, the same total liquid current running in a hellicoidal movement from one plate to the other.

2. Column having at least four sub-sectors according to claim 1, characterised in that the vertical wall (11) sub-dividing the sectors into sub-sectors is perpendicular to the continuous vertical wall (2) dividing the column into two sectors.

3. Column having six sub-sectors according to claim 1, characterised by two parallel vertical walls (12, 13) placed at right angles in relation to the continuous vertical wall (2), dividing the column into six subsectors which are leaktight with respect to the passage of gas and vapours and provided with cut-out sections above each plate.

4. Column having at least eight sub-sectors according to claim 2, characterised in that each sub-sector created by the sub division by the continuous vertical wall (2) and by the vertical wall (11) provided with a cut-out section is subdivided into two sectors of substantially equal surface by an additional vertical wall.

5. Column according to one of claims 1 to 4, characterised in that the cut-out section (4e, 5e, 6e) provided for each vertical wall (11) sub-dividing each sector into sub-sectors has a height at least equal to the height of the outlet dam (4d, 5d, 6d) to provide the hydraulic seal effect in the place of separation of sectors of the column.

6. Column according to one of claims 1 to 5, characterised in that each plate in the form of a semicircle has at one of its edges a segment of a circle (4a, 5a, 6a) extending as far as the casing (1) of the column and extending towards the sector opposite that occupied by the plate, the said segments (4a, 5a, 6a) constiting the entry area of the liquid coming from the upper plate towards the lower plate and having at the other edge a sectional pane forming an outlet (4d, 5d, 6d).

7. Column according to one of claims 1 to 6, characterised in that vertical partitions (3, 7 & 3', 7') placed orthogonally in relation to the continuous vertical wall (2) define with the wall (1) of the casing of the vertical chimneys having a circle segment cross section, the said vertical partitions having over one half of their horizontal section a continuous face (3, 3') joining the liquid reception areas of the plates (4, 6) occupying the same column sector and provided with cut-out sections (4c, 5c, 6c) in this position and having on the other half of their horizontal section a succession of faces (7, 7') of smaller length joining with their lower-edge the segment of the edge of the plate (4a, 5a, 6a) forming the liquid entry area and with their upper edge joining the sectioned pane of the immediately higher plate forming with the said pane an outlet dam (4d, 5d, 6d).

8. Column according to claim 7, characterised in that at least one of the continuous faces (3, 3') of vertical partitions is formed by bending the continuous vertical wall (2) at right angles.

FIG. 2

FIG.3